(19) Europäisches Patentamt / European Patent Office / Office européen des brevets

(11) **EP 4 170 097 B1**

(12) **EUROPEAN PATENT SPECIFICATION**

(45) Date of publication and mention of the grant of the patent:
**22.07.2026 Bulletin 2026/30**

(21) Application number: **21845382.7**

(22) Date of filing: **22.07.2021**

(51) International Patent Classification (IPC):
*E02F 3/43* (2006.01)     *E02F 9/22* (2006.01)
*F15B 11/024* (2006.01)     *F15B 21/14* (2006.01)
*F15B 1/033* (2006.01)

(52) Cooperative Patent Classification (CPC):
**E02F 9/2217; E02F 9/2228; E02F 9/2296;**
**F15B 1/024; F15B 11/024; F15B 21/14;**
E02F 3/435; F15B 1/033; F15B 2211/20515;
F15B 2211/20523; F15B 2211/20546;
F15B 2211/212; F15B 2211/3058; F15B 2211/6306;
F15B 2211/6313;                              (Cont.)

(86) International application number:
**PCT/KR2021/009514**

(87) International publication number:
**WO 2022/019691 (27.01.2022 Gazette 2022/04)**

(54) **CONSTRUCTION MACHINE AND CONTROL METHOD THEREOF**

BAUMASCHINE UND STEUERUNGSVERFAHREN DAFÜR

ENGIN DE CHANTIER ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2020 KR 20200092351**

(43) Date of publication of application:
**26.04.2023 Bulletin 2023/17**

(73) Proprietor: **HD Hyundai Infracore Co., Ltd.**
**Incheon 22502 (KR)**

(72) Inventor: **KANG, Byungil**
**Incheon 21986 (KR)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
EP-A1- 3 604 691       WO-A1-2018/190615
WO-A1-2020/067584     JP-A- 2016 148 392
JP-A- 2018 071 311      JP-A- 2019 052 702
KR-A- 20110 029 634    US-B2- 10 400 802

(52) Cooperative Patent Classification (CPC): (Cont.)
F15B 2211/6346; F15B 2211/6654;
F15B 2211/7053; F15B 2211/7058; F15B 2211/75;
F15B 2211/761

## Description

### [Technical Field]

The present disclosure relates to a construction machine and a method of controlling the same, and more particularly, to a construction machine and a method of controlling the same, which are capable of controlling a descending speed of a boom.

### [Background Art]

Construction machines refer to all the machines used in civil engineering work or construction work. In general, the construction machine has an engine and a hydraulic pump that operates using power of the engine. The construction machine travels or operates working devices by power generated by the engine and the hydraulic pump.

For example, an excavator, which is one of the construction machines, refers to a construction machine that performs work such as excavation work for digging land, loading work for transporting soil, crushing work for dismantling buildings, and leveling work for leveling ground surfaces at civil engineering, building, and construction sites. The excavator includes a traveling body configured to serve to move the excavator, an upper turning body mounted on the traveling body and configured to rotate by 360 degrees, and working devices.

In addition, the excavator includes drive devices such as a traveling motor used to move the excavator, a turning motor used to swing the upper turning body, and a boom cylinder, an arm cylinder, a bucket cylinder, and an option cylinder which are used for the working devices. Further, the drive devices are operated by a working fluid discharged from a variable capacity hydraulic pump operated by the engine or the electric motor.

In addition, the excavator has an operating device including a joystick, an operating lever, a pedal, or the like for controlling various types of drive devices.

In addition, recently, an energy regeneration system is applied to the construction and uses the recovered energy, as auxiliary energy, to operate the various types of drive devices.

In a case in which the working device such as a boom is moved upward or downward by the boom cylinder, the working fluid at a head side of the boom cylinder is pushed out at a high pressure from the boom cylinder by potential energy of the boom when the raised boom is lowered. The potential energy of the boom disappears as the high-pressure working fluid is converted into thermal energy and then dissipated or the high-pressure working fluid is returned to a storage tank.

Therefore, the energy regeneration system may accumulate the high-pressure working fluid in an accumulator and operate a regeneration motor with the accumulated working fluid, thereby reducing fuel consumption of the engine that operates the hydraulic pump.

However, a pressure of the working fluid discharged from the head side of the boom cylinder is changed by the accumulator, and the change in pressure makes it impossible for an operator to control a speed of the boom in accordance with the operator's manipulation intention. That is, because of the change in pressure in the accumulator, the energy regeneration system in the related art cannot cope with a change in descending speed of the boom that occurs regardless of the operator's manipulation intention.

Specifically, for example, the pressure is changed by the working fluid accumulated in the accumulator even though the operator constantly operates a joystick so that the boom descends at a constant speed when the operator lowers the boom by manipulating the joystick. As a result, a descending speed of the boom decreases contrary to the operator's manipulation intention. EP3604691 discloses a hydraulic system of construction machinery according to the preamble portion of claim 1 that includes a boom cylinder divided into a head side and a rod side, a first boom hydraulic line connected to the head side of the boom cylinder and serving to supply a hydraulic oil to the boom cylinder during an ascending operation of a boom, a second boom hydraulic line connected to the rod side of the boom cylinder and serving to supply the hydraulic oil to the boom cylinder during a descending operation of the boom, a regeneration line branching from the first boom hydraulic line and serving so that the hydraulic oil discharged from the head side of the boom cylinder flows during the descending operation of the boom; a circulation line branching from the regeneration line and connected to the second boom hydraulic line, an accumulator connected to the regeneration line and serving to accumulate the hydraulic oil discharged from the boom cylinder, a boom regeneration valve including a first regeneration spool provided at the regeneration line and a second regeneration spool provided at the circulation line, and a control unit serving to close the boom regeneration valve during the ascending operation of the boom and to adjust opening areas of the first regeneration spool and the second regeneration spool during the descending operation of the boom. US 10400802 discloses a hydraulic drive apparatus that includes an accumulator for receiving hydraulic fluid discharged from a hydraulic actuator during a lowering drive, an accumulator flow regulator capable of changing a flow rate of hydraulic fluid to be introduced to the accumulator from a closed circuit, a regeneration actuator for converting energy of the hydraulic fluid accumulated in the accumulator into motive force, a regeneration selector valve interposed between the accumulator and the regeneration actuator, a pump control section for limiting a pump discharge flow rate during the lowering drive, and a speed control section for operating the accumulator-flow-rate regulator so as to bring an actuating speed of the hydraulic actuator close to a target speed during the lowering drive.

**[Disclosure]**

**[Technical Problem]**

An embodiment of the present disclosure provides a construction machine and a method of controlling the same, which recover potential energy of a boom when the boom descends, which makes it possible to improve fuel economy and control a speed of the boom according to a user's intention. descends, which makes it possible to improve fuel economy and control a speed of the boom according to a user's intention.

[Technical Solution]

According to the invention a construction machine is provided having the features of claim 1.
In addition, another embodiment of the present disclosure provides a method of controlling a construction machine according to claim 7.

**[Advantageous Effects]**

According to the embodiment of the present disclosure, the construction machine and the method of controlling the same recover potential energy of the boom when the boom descends, which makes it possible to improve the fuel economy and control the speed of the boom according to the user's intention.

**[Description of Drawings]**

FIG. 1 is a side view of a construction machine according to an embodiment of the present disclosure.

FIG. 2 is a hydraulic circuit diagram illustrating a hydraulic system used for the construction machine in FIG. 1.

FIG. 3 is a graph illustrating a change in pressure of a working fluid and a change in magnitude of a control signal according to an operation of the construction machine in FIG. 1.

FIG. 4 is a control flowchart illustrating a control flow of the construction machine in FIG. 1.

**[Description of Main Reference Numerals of Drawings]**

100: Engine
101: Construction machine
120: Lower traveling body
130: Upper turning body
135: Upper frame
150: Cabin
160: Working device
170: Boom
180: Arm
182: Arm cylinder
200: Boom cylinder
210: Head side
220: Rod side
310: Main pump
380: Regeneration motor
400: Boom regeneration valve
410: First spool

420: Second spool
480: Accumulator valve
500: Control valve
610: First boom hydraulic line
620: Second boom hydraulic line
630: Recirculation line
640: Regeneration line
650: Main hydraulic line
680: Working fluid storage line
700: Control device
710: First pressure sensor
720: Second pressure sensor
780: Accumulator pressure sensor
800: Accumulator

**[Mode for Invention]**

Hereinafter, embodiments of the present disclosure will be described in detail with reference to the accompanying drawings so that those with ordinary skill in the art to which the present disclosure pertains may easily carry out the embodiments. The present disclosure may be implemented in various different ways, and is not limited to the embodiments described herein.

It is noted that the drawings are schematic, and are not illustrated based on actual scales. Relative dimensions and proportions of parts illustrated in the drawings are exaggerated or reduced in size for the purpose of clarity and convenience in the drawings, and any dimension is just illustrative but not restrictive. The same reference numerals designate the same structures, elements or components illustrated in two or more drawings in order to exhibit similar characteristics.

Embodiments of the present disclosure illustrate ideal embodiments of the present disclosure in detail. As a result, various modifications of the drawings are expected. Therefore, the embodiments are not limited to specific forms in regions illustrated in the drawings, and for example, include modifications of forms by the manufacture thereof.

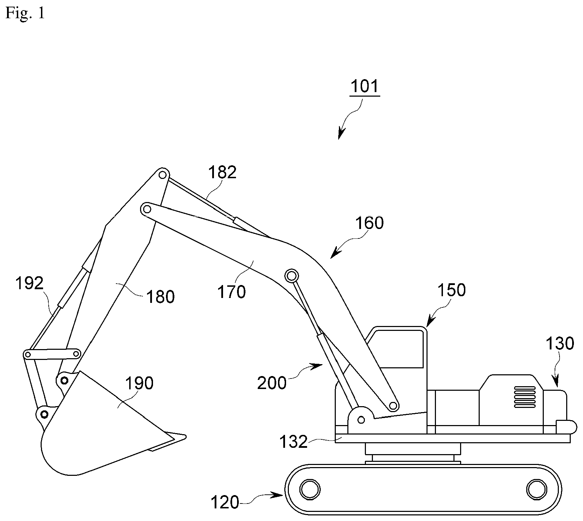

Hereinafter, a construction machine 101 according to an embodiment of the present disclosure will be described with reference to FIGS. 1 to 3.

In the present specification, an excavator will be described as an example of the construction machine 101. However, the construction machine 101 is not limited to the excavator, and the present disclosure may be applied to all construction machines, each equipped with working devices 160 such as a boom 170 that generates potential energy.

As illustrated in FIG. 1, the construction machine 101 may include a lower traveling body 120, an upper turning body 130 turnably mounted on the lower traveling body 120, a cabin 150 installed on the upper turning body 130 and configured such that a user is seated in the cabin 150, and various types of working devices 160.

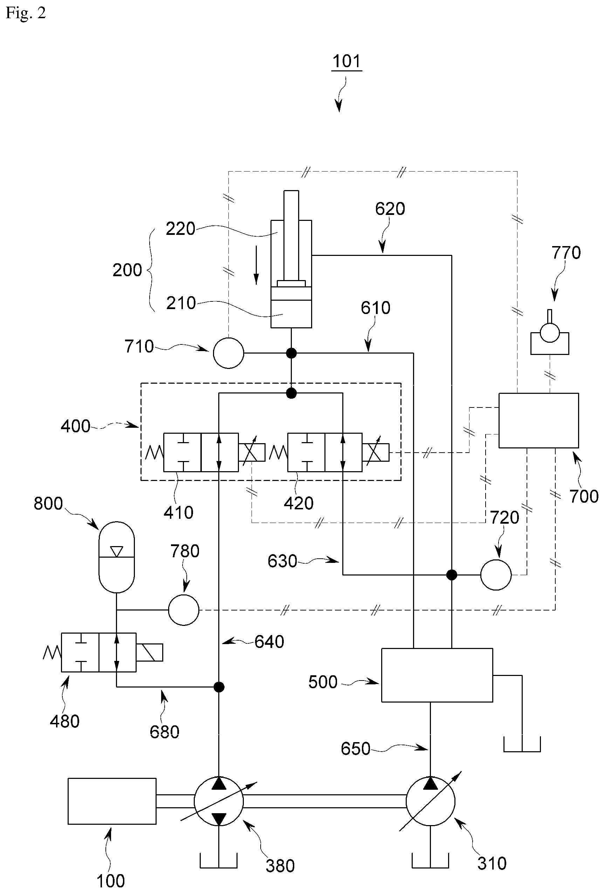

The lower traveling body 120 may support the upper turning body 130 and move the construction machine 101 by means of a traveling device using power generated by an engine 100 (illustrated in FIG. 2). The lower traveling body 120 may be an endless track type traveling body including an endless track or a wheel type traveling body including traveling wheels.

The upper turning body 130 may set a working direction by rotating on the lower traveling body 120. The upper turning body 130 may include an upper frame 132, and the cabin 150 and the working devices 160 installed on the upper frame 132.

The working devices 160 may include the boom 170, an arm 180, and a bucket 190. A boom cylinder 200 may be installed between the boom 170 and the upper frame 132 and control a motion of the boom 170. In addition, an arm cylinder 182 may be installed between the boom 170 and the arm 180 and control a motion of the arm 180. A bucket cylinder 192 may be installed between the arm 180 and the bucket 190 and control a motion of the bucket 190.

As the boom cylinder 200, the arm cylinder 182, and the bucket cylinder 192 are extended or contracted, the boom 170, the arm 180, and the bucket 190 may implement various motions, and the working devices 160 may perform various types of work. In this case, the boom cylinder 200, the arm cylinder 182, and the bucket cylinder 192 are operated by a working fluid supplied from a main pump 310 (illustrated in FIG. 2) to be described below.

As illustrated in FIG. 2, a hydraulic system used for the construction machine 101 according to the embodiment of the present disclosure includes the boom cylinder 200, a boom regeneration valve 400, an operating device 770, an accumulator 800, a regeneration motor 380, and a control device 700.

In addition, the hydraulic system used for the construction machine 101 according to the embodiment of the present disclosure may further include an accumulator pressure sensor 780, a first pressure sensor 710, a second pressure sensor 720, a control valve 500, a first boom hydraulic line 610, a second boom hydraulic line 620, a recirculation line 630, a regeneration line 640, the main pump 310, the engine 100, a working fluid storage line 680, a main hydraulic line 650, and an accumulator valve 480.

The engine 100 is connected to the main pump 310 to be described below and provides power. Further, the engine 100 generates power by combusting fuel. For example, the engine 100 may be a diesel engine, a liquefied natural gas (LNG) engine, a compressed natural gas (CNG) engine, an adsorbed natural gas (ANG) engine, a liquefied petroleum gas (LPG) engine, or a gasoline engine. However, the embodiment of the present disclosure is not limited thereto, and other power devices such as an electric motor may be used as the engine 100.

In addition, the engine 100 may be connected to the regeneration motor 380 to be described below in addition to the main pump 310 and receive regenerative energy from the regeneration motor 380.

The main pump 310 discharges the working fluid by being operated by the power generated by the engine 100. The working fluid discharged from the main pump 310 may be supplied to various types of working devices 160 including the boom cylinder 200 to be described below. In addition, the main pump 310 may be a variable capacity pump that varies a flow rate of the discharged working fluid by changing an angle of the swash plate.

Hereinafter, in the present specification, the boom cylinder 200 will be described as an example of the several working devices 160. The boom cylinder 200 is configured to move the boom 170 upward or downward and includes a head side 210 and a rod side 220.

The control valve 500 controls the supply of the working fluid, which is discharged from the main pump 310, to the boom cylinder 200. That is, depending on a switching operation of the control valve 500, the working fluid discharged from the main pump 310 may be supplied to the head side 210 of the boom cylinder 200 or the rod side 220 of the boom cylinder 200, or the supply of the working fluid may be cut off.

The main hydraulic line 650 connects the main pump 310 and the control valve 500. That is, the working fluid discharged from the main pump 310 flows to the control valve 500 through the main hydraulic line 650.

The accumulator 800 stores the working fluid discharged from the boom cylinder 200.

The regeneration motor 380 produces renewable energy by performing a regenerative operation by using the working fluid discharged from the boom cylinder 200 or the working fluid accumulated in the accumulator 800 and discharged from the accumulator 800. The regeneration motor 380 is connected to the regeneration line 640 to be described below and operated by the pressure of the working fluid supplied through the regeneration line 640. The regeneration motor 380 may assist the engine 100 in operating the main pump 310. That is, the fuel consumption of the engine 100 may be reduced as much as the regeneration motor 380 operates the main pump 310. In addition, the regeneration motor 380 may also be a variable capacity motor and adjust an angle of a swash plate on the basis of a signal from the control device 700.

For example, the engine 100, the main pump 310, and the regeneration motor 380 may be directly connected.

The first boom hydraulic line 610 connects the control valve 500 and the head side 210 of the boom cylinder 200.

The second boom hydraulic line 620 connects the control valve 500 and the rod side 220 of the boom cylinder 200.

That is, the working fluid, which is discharged from the main pump 310 and passes through the control valve 500 after flowing along the main hydraulic line 650, may flow to the head side 210 of the boom cylinder 200 along the first boom hydraulic line 610 or to the rod side 220 of the boom cylinder 200 along the second boom hydraulic line 620.

The recirculation line 630 branches off from the first boom hydraulic line 610 and is connected to the second boom hydraulic line 620. A part of the working fluid, which is discharged to the head side 210 of the boom cylinder 200 by the recirculation line 630, may be supplied to the rod side 220 of the boom cylinder 200.

Therefore, a part of the working fluid, which is discharged from the head side 210 of the boom cylinder 200 when the boom 170 descends, flows along the recirculation line 630 and then is introduced into the rod side 220 of the boom cylinder 200 through the second boom hydraulic line 620. Because the working fluid, which is discharged from the head side 210 of the boom cylinder 200 when the boom 170 descends, is introduced into the rod side 220 of the boom cylinder 200 as described above, it is possible to increase operating pressure of the boom 170 and improve efficiency in using energy.

The regeneration line 640 branches off from the recirculation line 630 and is connected to the regeneration motor 380. As described above, the regeneration line 640 branches off from the recirculation line 610 and allows the working fluid, which is discharged from the head side 210 of the boom cylinder 200 when the boom 170 descends, to flow toward the regeneration motor 380 direction. That is, the working fluid, which is discharged from the boom cylinder 200 and flows along the regeneration line 640, operates the regeneration motor 380.

The working fluid storage line 680 branches off from the recirculation line 640 and is connected to the accumulator 800. Therefore, the working fluid discharged from the boom cylinder 200 may be stored in the accumulator 800 through the working fluid storage line 680. In addition, the working fluid accumulated in the accumulator 800 may be supplied to the regeneration motor 380 and operate the regeneration motor 380.

The accumulator valve 480 may be installed in the working fluid storage line 680 and control the inflow of the working fluid to the accumulator 800 and the outflow of the working fluid from the accumulator 800.

The accumulator pressure sensor 780 measures pressure of the accumulator 800. For example, the accumulator pressure sensor 780 may be installed in the working fluid storage line 680 and provided between the accumulator valve 480 and the accumulator 800.

The first pressure sensor 710 is installed in the first boom hydraulic line 610. The first pressure sensor 710 may measure pressure of the head side 210 of the boom cylinder 200.

The second pressure sensor 720 is installed in the second boom hydraulic line 620. The second pressure sensor 720 may measure pressure of the rod side 220 of the boom cylinder 200.

The boom regeneration valve 400 controls a flow rate of the working fluid discharged from the head side 210 of the boom cylinder 200. Specifically, the boom regeneration valve 400 includes: a first spool 410 configured to adjust a passage flow rate of the regeneration line 640; and a second spool 420 configured to adjust a passage flow rate of the recirculation line 630. That is, the first spool 410 may adjust a flow rate of the working fluid that is discharged from the head side 210 of the boom cylinder 200 and flows toward the accumulator 800 and the regeneration motor 380 along the regeneration line 640. Further, the second spool 420 may adjust a flow rate of the working fluid that is discharged from the head side 210 of the boom cylinder 200 and introduced into the rod side 220 of the boom cylinder 200 along the recirculation line 630.

For example, when the second spool 420 is opened, high pressure of the head side 210 is transferred to the rod side 220, such that the pressure of the rod side 220 increases, and the increased pressure of the rod side 220 increases the pressure of the head side 210 again. Therefore, the pressure of the head side 210 of the boom cylinder 200 increases while the boom 170 descends, and the increased pressure of the head side 210 operates the regeneration motor 380 through the first spool 410 or is stored in the accumulator 800, thereby improving energy efficiency.

As described above, the boom regeneration valve 400 controls a descending speed of the boom 170. For example, in response to a control instruction received by the control device 700 to be described below, the first spool 410 and the second spool 420 respectively move in sleeves and adjust opening areas through which the working fluid is to pass. In this case, the first spool 410 and the second spool 420 may be respectively restored to exact positions by return springs. That is, positions of the first and second spools 410 and 420 of the boom regeneration valve 400 vary depending on the received control instruction, and the opening area is adjusted on the basis of displacements of the first and second spools 410 and 420. For example, the control instruction may be a pilot pressure $P_{S1}$.

The operating device 770 generates an operating signal for operating the boom 170. The control device 700 to be described below receives the operating signal from the operating device 770 and transfers a control instruction, which corresponds to the operating signal, to the first spool 410 and the second spool 420 of the boom regeneration valve 400. In addition, the control device 700 may receive the operating signal from the operating device 770 and transfer the control instruction, which corresponds to the operating signal, to the regeneration motor 380.

In addition, the operating device 770 may include a joystick, an operating lever, a pedal, and the like installed in the cabin 150 so that a user may manipulate the various types of working devices 160 and the traveling device.

The control device 700 controls an operation of the boom regeneration valve 400. That is, the control device 700 may adjust the opening areas of the first and second spools 410 and 420 of the boom regeneration valve 400.

In the embodiment of the present disclosure, the control device 700 may correct an opening area of the boom regeneration valve 400 on the basis of the operating signal of the operating device 770 and the pressure of the accumulator 800. In this case, the control device 700 may correct the control instruction to be transferred to the boom regeneration valve 400 so that the opening area of the boom regeneration valve 400 increases as the pressure of the accumulator 800 increases.

For example, the control device 700 may calculate a target passage flow rate of the boom regeneration valve 400 corresponding to the operating signal of the operating device 770 and calculate the opening area of the boom regeneration valve 400 that allows the working fluid to flow at the target passage flow rate. That is, the opening areas of the first and second spools 410 and 420 may be calculated. That is, the control device 700 determines a target speed of the boom 170 corresponding to the operating signal of the operating device 770 and calculates the target passage flow rate at which the working fluid needs to pass through the boom regeneration valve 400 to achieve the target speed.

The first spool 410 of the boom regeneration valve 400 will be described in detail as an example. First, a flow rate $Q_{reg}$ of the working fluid supplied to the regeneration line 640 may be calculated by Equation 1 below.

[Equation 1]

$$Q_{reg} = Q_{head} - Q_{rod} = V_{bm}\left(A_{head} - A_{rod}\right)$$

Here, $Q_{head}$ represents a flow rate of the working fluid discharged from the head side 210 of the boom cylinder 200, and $Q_{rod}$ represents a flow rate of the working fluid introduced into the rod side 220 of the boom cylinder 200. $V_{bm}$

represents a speed of the boom 170, $A_{head}$ represents an opening area of the head side 210 of the boom cylinder 200, and $A_{rod}$ represents an opening area of the rod side 220 of the boom cylinder 200.

Further, a flow rate $Q_{motor}$ of the working fluid, which is supplied to the regeneration line 640 and passes through the regeneration motor 380, may be calculated by Equation 2 below.

[Equation 2]

$$Q_{motor} = q \cdot \omega = f(\theta) \cdot \omega$$

Here, q represents a volume of the regeneration motor and is proportional to a swash plate angle $\theta$. $\omega$ represents a rotational speed of the regeneration motor.

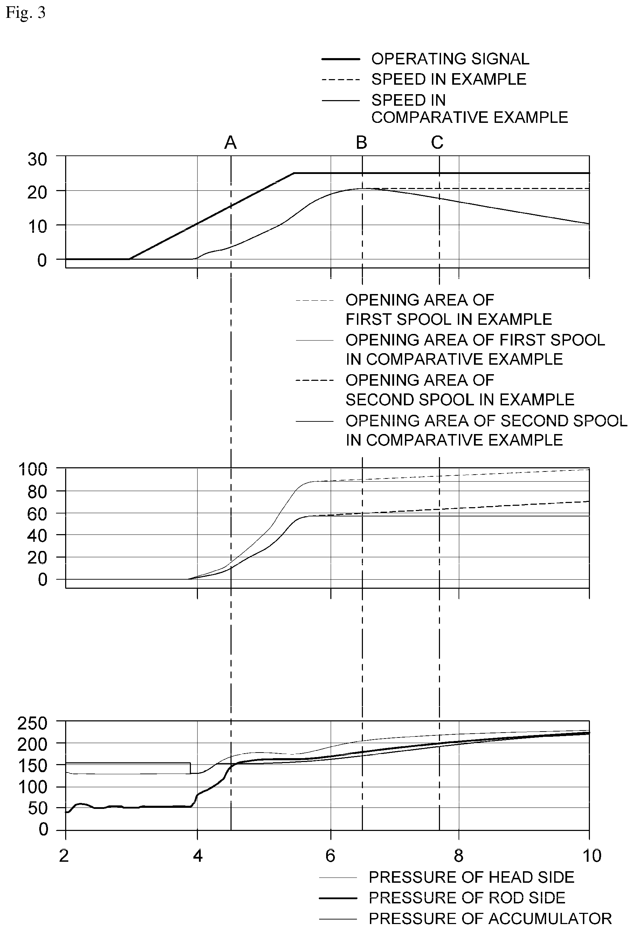

Because the speed $V_{bm}$ of the boom is not high when the boom initially descends, the working fluid, which is supplied to the regeneration line 640 at the flow rate $Q_{reg}$, may pass through the regeneration motor 380. In this case, because there is no flow rate of the working fluid supplied to the accumulator 800, the pressure Pa of the accumulator 800 does not increase. This corresponds to point A in time in FIG. 3.

When the speed of the boom 170 increases, the flow rate of the working fluid passing through the regeneration line 640 increases in proportion to the increase in speed of the boom 170. When the flow rate of the working fluid passing through the regeneration line 640 exceeds a maximum flow rate of the regeneration motor 380, the working fluid is supplied to the accumulator 800, and the pressure Pa of the accumulator increases. This corresponds to point B in time in FIG. 3.

When the pressure Pa of the accumulator 800 increases, a pressure difference between two opposite ends of the first spool 410 decreases in case that the control instruction inputted to the first spool 410 of the boom regeneration valve 400 is constant. In this case, the pressure difference between the two opposite ends means a pressure difference between an inlet through which the working fluid is introduced and an outlet through which the working fluid is discharged.

For example, a flow rate of the working fluid passing through the first spool 410 of the boom regeneration valve 400 is expressed by Equation 3 below.

[Equation 3]

$$Q = C_d \cdot A \sqrt{\frac{2 \cdot (p_h - p_a)}{\rho}}$$

Here, A represents the opening area of the first spool 410. $(p_h - p_a)$ represents the pressure difference between the two opposite ends of the first spool 410. $C_d$ is a discharge coefficient that is a preset constant. Further, $\rho$ represents density.

In case that the control instruction transferred to the first spool 410 of the boom regeneration valve 400 is constant, the opening area A of the first spool 410 is also constant. In this case, when the pressure of the accumulator 800 increases, $p_a$ in Equation 3 increases. As a result, $(p_h - p_a)$ decreases, and the flow rate Q of the working fluid passing through the first spool 410 decreases. This means that the descending speed of the boom 170 decreases. This corresponds to point C in time in FIG. 3.

In the embodiment of the present disclosure, the flow rate $Q_{reg}$ of the working fluid supplied to the regeneration line 640 is the flow rate of the working fluid discharged from the head side 210 of the boom cylinder 200, and the flow rate $Q_{reg}$ of the working fluid supplied to the regeneration line 640 is higher than a maximum passage flow rate $Q_{motor\,max}$ of the regeneration motor 380. Therefore, when the pressure of the accumulator 800 increases, the control device 700 increases the opening areas of the first and second spools 410 and 420 of the boom regeneration valve 400 in proportion to the pressure of the accumulator 800. In this case, an opening area for compensating for a decrease in pressure is determined by Equation 4 below. The control device 700 compensates for a difference between an opening area instruction value defined in advance by the current operating signal of the operating device 770 and the opening area calculated on the basis of Equation 4 below.

Equation 4 for calculating the opening area for compensating for the decrease in pressure is as follows.

[Equation 4]

$$A = \frac{Q}{C_d \sqrt{\dfrac{2 \cdot (p_h - p_a)}{\rho}}}$$

With the above-mentioned control, the decrease in speed of the boom 170, which occurs when the pressure of the accumulator 800 increases and ($p_h$ - $p_a$) in Equation 4 decreases, may be compensated by increasing the opening area A of the first spool 410, thereby improving control stability.

The embodiment in FIG. 3 is one embodiment according to the present disclosure. As described above, the embodiment shows that the decrease in speed of the boom 170 made by the increase in pressure of the accumulator 800 is compensated by increasing the opening area A of the first spool 410, such that the control stability is improved.

In contrast, in a comparative example, the decrease in speed of the boom 170 made by the increase in pressure of the accumulator 800 is not compensated by increasing the opening area A of the first spool 410, such that the control stability of the operating process of the construction machine in the related art deteriorates.

In addition, the control device 700 may control several components of the construction machine 101, such as the engine 100, the main pump 310, the regeneration motor 380, and the control valve 500. Further, the control device 700 may include one of or both an engine control unit (ECU) and a vehicle control unit (VCU).

With the above-mentioned configuration, the construction machine 101 according to the embodiment of the present disclosure may recover potential energy of the boom 170 when the boom 170 descends, which makes it possible to improve fuel economy of the engine 100 and control the speed of the boom 170 according to the user's intention.

Specifically, from a point in time at which the flow rate of the working fluid, which is discharged to the regeneration line 640 from the head side 210 of the boom cylinder 200 when the boom 170 descends, exceeds a maximum allowable flow rate of the regeneration motor 380 at a current rotational speed and thus the pressure of the accumulator 800 increases, the opening areas of the first and second spools 410 and 420 of the boom regeneration valve 400 are increased in proportion to the increase in pressure of the accumulator 800, such that the speed of the boom 170 may be controlled according to the user's intention.

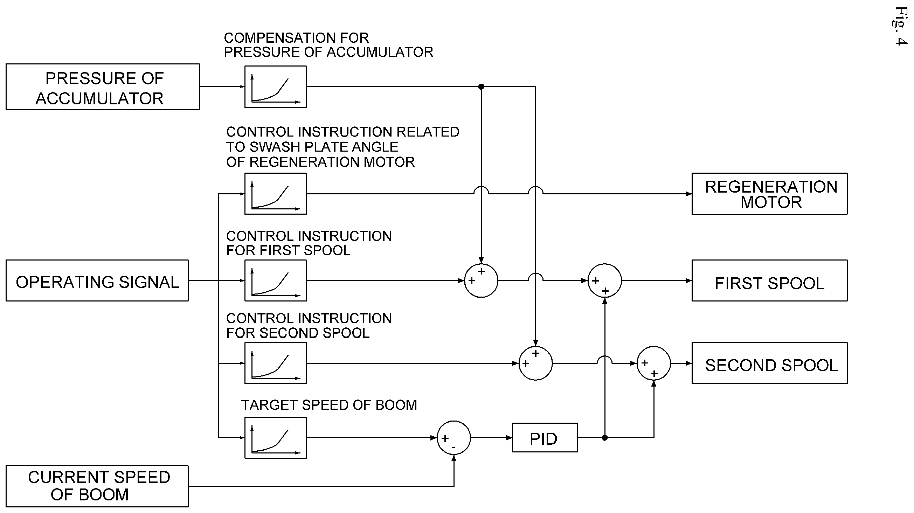

Hereinafter, a method of controlling the construction machine 101 according to the embodiment of the present disclosure will be described in detail with reference to FIG. 4.

First, the operating signal for operating the boom 170 is received. For example, when the user generates the operating signal by operating the operating device 770 to operate the boom 170, the control device 700 receives the operating signal.

Next, the target passage flow rate at which the working fluid needs to be discharged from the boom cylinder 200 is calculated in response to the operating signal.

For example, the control device 700 determines the target speed of the boom 170 in response to the operating signal. That is, the control device determines the target speed of the boom 170 desired by the user. Further, the control device 700 calculates the target passage flow rates of the first and second spools 410 and 420 of the boom regeneration valve 400 to achieve the target speed. According to the invention the target passage flow rate is a flow rate which the working fluid is discharged to the rod side 220 of the boom cylinder 200 from the head side 210 of the boom cylinder 200.

Next, the control device 700 calculates the opening areas of the first and second spools 410 and 420 of the boom regeneration valve 400 that are required to allow the working fluid to flow at the calculated target passage flow rate. When the control device 700 calculates the opening areas of the first and second spools 410 and 420 of the boom regeneration valve 400, the control device 700 transfers the control instruction to the first spool 410 and the second spool 420.

In addition, the control device 700 may transfer the control instruction for adjusting the swash plate angle to the regeneration motor 380.

Next, the control device receives information on pressure of the accumulator 800 that stores the working fluid discharged from the boom cylinder 220. Further, the control device corrects the target passage flow rate on the basis of the pressure of the accumulator 800.

For example, the control device 700 corrects the opening areas of the first and second spools 410 and 420 of the boom regeneration valve 400 on the basis of the pressure of the accumulator 800. Specifically, the control device 700 transfers the control instruction to the first spool 410 and the second spool 420 of the boom regeneration valve 400 so that the first spool 410 and the second spool 420 of the boom regeneration valve 400 are opened by the calculated opening area. Further, the control device 700 compensates for the control instruction to be transferred to the first spool 410 and the second spool 420 of the boom regeneration valve 400 so that as the pressure of the accumulator 800 increases, the opening areas of the first and second spools 410 and 420 of the boom regeneration valve 400 increases in proportion to the increase in pressure of the accumulator 800.

In addition, the control device 700 may compensate for the control instruction to be transferred to the first spool 410 and the second spool 420 of the boom regeneration valve 400 in order to control the opening areas of the first and second spools 410 and 420 of the boom regeneration valve 400 so that the current speed of the boom 170 follows the target speed.

For example, when the current speed of the boom 170 is lower than the target speed, the control device may compensate for the control instruction to be transferred to the first spool 410 and the second spool 420 of the boom regeneration valve 400 to increase the opening areas of the first and second spools 410 and 420.

The method of controlling the construction machine 101 may recover potential energy of the boom 170 when the boom 170 descends, which makes it possible to improve fuel economy of the engine 100 and control the speed of the boom 170 according to the user's intention.

While the embodiments of the present disclosure have been described with reference to the accompanying drawings, those skilled in the art will understand that the present disclosure may be carried out in any other specific form as defined by the appended claims.

**[Industrial Applicability]**

The embodiment of the present disclosure may provide the construction machine and the method of controlling the same, which recover potential energy of the boom when the boom descends, which makes it possible to improve fuel economy and control the speed of the boom according to the user's intention.

**Claims**

**1.** A construction machine (101), which comprises a boom (170), the construction machine (101) comprising:

a boom cylinder (200) configured to move the boom (170) upward or downward and comprises a head side (210) and a rod side (220), said boom cylinder (200) installed between the boom (170) and an upper frame (132) of an upper turning body (130) of the construction machine (101);

a boom regeneration valve (400) configured to control a flow rate of a working fluid discharged from a head side (210) of the boom cylinder (200);

an operating device (770) configured to generate an operating signal for operating the boom (170);

an accumulator (800) configured to store the working fluid discharged from the boom cylinder (200);

a regeneration motor (380) configured to produce renewable energy by performing a regenerative operation by using the working fluid discharged from the boom cylinder (200) or the working fluid discharged from the accumulator (800); and

a control valve (500) configured to control a supply of the working fluid to the boom cylinder (200);

a first boom hydraulic line (610) configured to connect the control valve (500) and the head side (210) of the boom cylinder (200);

a second boom hydraulic line (620) configured to connect the control valve (500) and the rod side (220) of the boom cylinder (200);

a recirculation line (630) branching off from the first boom hydraulic line (610) and connected to the second boom hydraulic line (620); and

a regeneration line (640) branching off from the recirculation line (630) and connected to the regeneration motor (380),

wherein the boom regeneration valve (400) comprises:

a first spool (410) configured to adjust a passage flow rate of the regeneration line (640); and
a second spool (420) configured to adjust a passage flow rate of the recirculation line (630),

**characterized in that** the construction machine further comprises:
a control device (700) configured to correct an opening area of the first and second spools (410,420) of the boom regeneration valve (400) on the basis of pressure of the accumulator (800) when the boom (170) descends.

**2.** The construction machine (101) of claim 1, wherein the control device (700) corrects a control instruction to be transferred to the boom regeneration valve (400) so that the opening area of the second spool (420) of the boom regeneration valve (400) increases as the pressure of the accumulator (800) increases.

3. The construction machine (101) of claim 1, wherein the control device (700) determines a target speed of the boom (170) corresponding to the operating signal of the operating device (770),

   wherein the control device (700) calculates a target passage flow rate at which the working fluid needs to pass through the boom regeneration valve (400) to achieve the target speed, and
   wherein the control device (700) corrects a control instruction to be transferred to the boom regeneration valve (400) so that a current speed of the boom (170) follows the target speed.

4. The construction machine (101) of claim 1, further comprising:
   an accumulator pressure sensor (780) configured to measure pressure of the accumulator (800).

5. The construction machine (101) of claim 1, further comprising:

   a main pump (310) configured to supply the working fluid to the control valve (500); and
   an engine (100) connected to the main pump (310) and the regeneration motor (380).

6. The construction machine (101) of claim 1, further comprising:

   a working fluid storage line (680) branching off from the recirculation line (630) and connected to the accumulator (800); and
   an accumulator valve (480) installed in the working fluid storage line (680) and control an inflow of the working fluid to the accumulator (800) and an outflow of the working fluid from the accumulator (800).

7. A method of controlling a construction machine (101) according to any of claims 1 to 6 comprising a boom cylinder (200) configured to operate a boom (170), the method comprising:

   receiving an operating signal for operating the boom (170);
   receiving information on pressure of an accumulator (800) configured to store a working fluid discharged from the boom cylinder (200);
   calculating a target passage flow rate of the working fluid that needs to be discharged from the boom cylinder (200) in response to the operating signal; and
   correcting the target passage flow rate on the basis of the pressure of the accumulator (800),
   the method **characterized in that** the target passage flow rate is a flow rate discharged from a head side (210) of the boom cylinder (200) to a rod side (220) of the boom cylinder (200).

**Patentansprüche**

1. Baumaschine (101), die einen Ausleger (170) umfasst, wobei die Baumaschine (101) umfasst:

   einen Auslegerzylinder (200), der dazu ausgelegt ist, den Ausleger (170) nach oben oder nach unten zu bewegen, und eine Kopfseite (210) und eine Stangenseite (220) umfasst, wobei der Auslegerzylinder (200) zwischen dem Ausleger (170) und einem oberen Rahmen (132) eines oberen Drehkörpers (130) der Baumaschine (101) installiert ist;
   ein Ausleger-Regenerationsventil (400), das dazu ausgelegt ist, eine Durchflussrate eines Arbeitsfluids zu steuern, das von einer Kopfseite (210) des Auslegerzylinders (200) abgegeben wird;
   eine Betätigungsvorrichtung (770), die dazu ausgelegt ist, ein Betätigungssignal zum Betätigen des Auslegers (170) zu erzeugen;
   einen Druckspeicher (800), der dazu ausgelegt ist, das Arbeitsfluid zu speichern, das von dem Auslegerzylinder (200) abgegeben wird;
   einen Regenerationsmotor (380), der dazu ausgelegt ist, erneuerbare Energie zu erzeugen, indem er einen Regenerationsvorgang unter Verwendung des Arbeitsfluids, das von dem Auslegerzylinder (200) abgegeben wird, oder des Arbeitsfluids, das von dem Druckspeicher (800) abgegeben wird, durchführt; und
   ein Steuerventil (500), das dazu ausgelegt ist, eine Zufuhr des Arbeitsfluids zu dem Auslegerzylinder (200) zu steuern;
   eine erste Ausleger-Hydraulikleitung (610), die dazu ausgelegt ist, das Steuerventil (500) und die Kopfseite (210) des Auslegerzylinders (200) zu verbinden;
   eine zweite Ausleger-Hydraulikleitung (620), die dazu ausgelegt ist, das Steuerventil (500) und die Stangenseite (220) des Auslegerzylinders (200) zu verbinden;
eine Rückführleitung (630), die von der ersten Ausleger-Hydraulikleitung (610) abzweigt und mit der zweiten Ausleger-Hydraulikleitung (620) verbunden ist; und
eine Regenerationsleitung (640), die von der Rückführleitung (630) abzweigt und mit dem Regenerationsmotor (380) verbunden ist,
wobei das Ausleger-Regenerationsventil (400) umfasst:

eine erste Spule (410), die dazu ausgelegt ist, eine Durchgangs-Durchflussrate der Regenerationsleitung (640) einzustellen; und
eine zweite Spule (420), die dazu ausgelegt ist, eine Durchgangs-Durchflussrate der Rückführleitung (630) einzustellen,
**dadurch gekennzeichnet, dass** die Baumaschine ferner umfasst:
eine Steuervorrichtung (700), die dazu ausgelegt ist, einen Öffnungsbereich der ersten und der zweiten Spule (410, 420) des Ausleger-Regenerationsventils (400) gemäß des Drucks in dem Druckspeicher (800) zu korrigieren, wenn der Ausleger (170) abgesenkt wird.

2. Baumaschine (101) nach Anspruch 1, wobei die Steuervorrichtung (700) eine Steuerungsanweisung korrigiert, die an das Ausleger-Regenerationsventil (400) zu übertragen ist, so dass sich der Öffnungsbereich der zweiten Spule (420) des Ausleger-Regenerationsventils (400) mit steigendem Druck in dem Druckspeicher (800) vergrößert.

3. Baumaschine (101) nach Anspruch 1, wobei die Steuervorrichtung (700) eine Zielgeschwindigkeit des Auslegers (170) entsprechend dem Betätigungssignal der Betätigungsvorrichtung (770) bestimmt,

wobei die Steuervorrichtung (700) eine Ziel-Durchgangs-Durchflussrate berechnet, mit der das Arbeitsfluid durch das Ausleger-Regenerationsventil (400) strömen muss, um die Zielgeschwindigkeit zu erreichen, und
wobei die Steuervorrichtung (700) eine Steueranweisung korrigiert, die an das Ausleger-Regenerationsventil (400) zu übertragen ist, so dass eine aktuelle Geschwindigkeit des Auslegers (170) der Zielgeschwindigkeit folgt.

4. Baumaschine (101) nach Anspruch 1, ferner umfassend:
einen Druckspeicher-Drucksensor (780), der dazu ausgelegt ist, einen Druck in dem Druckspeicher (800) zu messen.

5. Baumaschine (101) nach Anspruch 1, ferner umfassend:

eine Hauptpumpe (310), die dazu ausgelegt ist, das Arbeitsfluid dem Steuerventil (500) zuzuführen; und
einen Motor (100), der mit der Hauptpumpe (310) und dem Regenerationsmotor (380) verbunden ist.

6. Baumaschine (101) nach Anspruch 1, ferner umfassend:

eine Arbeitsfluid-Speicherleitung (680), die von der Rückführleitung (630) abzweigt und mit dem Druckspeicher (800) verbunden ist; und
ein Druckspeicherventil (480), das in der Arbeitsfluid-Speicherleitung (680) installiert ist und einen Zufluss des Arbeitsfluids zu dem Druckspeicher (800) sowie einen Abfluss des Arbeitsfluids aus dem Druckspeicher (800) steuert.

7. Verfahren zum Steuern einer Baumaschine (101) nach einem der Ansprüche 1 bis 6, umfassend einen Auslegerzylinder (200), der dazu ausgelegt ist, einen Ausleger (170) zu betätigen, wobei das Verfahren umfasst:

Empfangen eines Betätigungssignals zum Betätigen des Auslegers (170);
Empfangen von Informationen über einen Druck in einem Druckspeicher (800), der dazu ausgelegt ist, ein Arbeitsfluid zu speichern, das von dem Auslegerzylinder (200) abgegeben wird;
Berechnen einer Ziel-Durchgangs-Durchflussrate des Arbeitsfluids, das als Reaktion auf das Betätigungssignal von dem Auslegerzylinder (200) abgegeben werden muss; und
Korrigieren der Ziel-Durchgangs-Durchflussrate gemäß dem Druck in dem Druckspeicher (800),
wobei das Verfahren **dadurch gekennzeichnet ist, dass** die Ziel-Durchgangs-Durchflussrate eine Durchflussrate ist, die von einer Kopfseite (210) des Auslegerzylinders (200) zu einer Stangenseite (220) des Aus-legerzylinders (200) abgegeben wird.

# EP 4 170 097 B1

**Revendications**

1. Engin de chantier (101), qui comprend une flèche (170), l'engin de chantier (101) comprenant :

   un vérin de flèche (200) conçu pour déplacer la flèche (170) vers le haut ou vers le bas et comprenant un côté tête (210) et un côté tige (220), ledit vérin de flèche (200) étant installé entre la flèche (170) et un châssis supérieur (132) d'un corps rotatif supérieur (130) de l'engin de chantier (101) ;
   une vanne de régénération de flèche (400) conçue pour commander un débit d'un fluide de travail évacué d'un côté tête (210) du vérin de flèche (200) ;
   un dispositif d'actionnement (770) conçu pour générer un signal d'actionnement pour actionner la flèche (170) ;
   un accumulateur (800) conçu pour stocker le fluide de travail évacué du vérin de flèche (200) ;
   un moteur de régénération (380) conçu pour produire de l'énergie renouvelable en effectuant une opération régénérative au moyen du fluide de travail évacué du vérin de flèche (200) ou du fluide de travail évacué de l'accumulateur (800) ;
   et
   une vanne de commande (500) conçue pour commander une alimentation du vérin de flèche (200) en fluide de travail ;
   une première conduite hydraulique de flèche (610) conçue pour raccorder la vanne de commande (500) et le côté tête (210) du vérin de flèche (200) ;
   une seconde conduite hydraulique de flèche (620) conçue pour raccorder la vanne de commande (500) et le côté tige (220) du vérin de flèche (200) ;
   une conduite de recirculation (630) partant de la première conduite hydraulique de flèche (610) et raccordée à la seconde conduite hydraulique de flèche (620) ; et
   une conduite de régénération (640) partant de la conduite de recirculation (630) et raccordée au moteur de régénération (380),
   dans lequel la vanne de régénération de flèche (400) comprend :

   une première bobine (410) conçue pour régler un débit de passage de la conduite de régénération (640) ; et
   une seconde bobine (420) conçue pour régler un débit de passage de la conduite de recirculation (630),
   **caractérisé en ce que** l'engin de chantier comprend en outre :
   un dispositif de commande (700) conçu pour corriger une aire d'ouverture de la première et la seconde bobine (410, 420) de la vanne de régénération de flèche (400) en fonction de la pression de l'accumulateur (800) lorsque la flèche (170) descend.

2. Engin de chantier (101) selon la revendication 1, dans lequel le dispositif de commande (700) corrige une instruction de commande destinée à être transférée à la vanne de régénération de flèche (400), de telle sorte que l'aire d'ouverture de la seconde bobine (420) de la vanne de régénération de flèche (400) augmente à mesure que la pression de l'accumulateur (800) augmente.

3. Engin de chantier (101) selon la revendication 1, dans lequel le dispositif de commande (700) détermine une vitesse cible de la flèche (170) correspondant au signal d'actionnement du dispositif d'actionnement (770),

   dans lequel le dispositif de commande (700) calcule un débit de passage cible avec lequel le fluide de travail doit traverser la vanne de régénération de flèche (400) pour obtenir la vitesse cible, et
   dans lequel le dispositif de commande (700) corrige une instruction de commande destinée à être transférée à la vanne de régénération de flèche (400), de telle sorte qu'une vitesse actuelle de la flèche (170) suit la vitesse cible.

4. Engin de chantier (101) selon la revendication 1, comprenant en outre :
   un capteur de pression d'accumulateur (780) conçu pour mesurer une pression de l'accumulateur (800).

5. Engin de chantier (101) selon la revendication 1, comprenant en outre :

   une pompe principale (310) conçue pour alimenter la vanne de commande (500) en fluide de travail ; et
   un moteur thermique (100) relié à la pompe principale (310) et au moteur de régénération (380).

6. Engin de chantier (101) selon la revendication 1, comprenant en outre :

   une conduite de stockage de fluide de travail (680) partant de la conduite de recirculation (630) et raccordée à l'accumulateur (800) ; et

une vanne d'accumulateur (480) installée dans la conduite de stockage de fluide de travail (680) et commandant un débit du fluide de travail entrant dans l'accumulateur (800) et un débit du fluide de travail sortant de l'accumulateur (800).

7. Procédé de commande d'un engin de chantier (101) selon l'une quelconque des revendications 1 à 6 comprenant un vérin de flèche (200) conçu pour actionner une flèche (170), le procédé comprenant :

la réception d'un signal d'actionnement pour actionner la flèche (170) ;

la réception d'informations sur la pression d'un accumulateur (800) conçu pour stocker un fluide de travail évacué du vérin de flèche (200) ;

le calcul d'un débit de passage cible du fluide de travail qui doit être évacué du vérin de flèche (200) en réponse au signal d'actionnement ; et

la correction du débit de passage cible en fonction de la pression de l'accumulateur (800),

le procédé étant **caractérisé en ce que** le débit de passage cible est un débit évacué d'un côté tête (210) du vérin de flèche (200) à un côté tige (220) du vérin de flèche (200).

Fig. 1

Fig. 2

Fig. 3

Fig. 4

**REFERENCES CITED IN THE DESCRIPTION**

**Patent documents cited in the description**

- EP 3604691 A
- US 10400802 B